# EUROPÄISCHE PATENTSCHRIFT

(11) **EP 0 602 500 B1**
(45) Veröffentlichungstag und Bekanntmachung des Hinweises auf die Patenterteilung: **04.03.1998**
(21) Anmeldenummer: 93119656.2
(22) Anmeldetag: 07.12.1993
(51) Int. Cl.: E06B 7/16, B65G 69/00

(54) **Verformbare Dichtung des Spaltes zwischen dem Rand einer Gebäudeöffnung und dem Heck eines an diese herangefahrenen Fahrzeuges**
Flexible sealing of the gap between the edge of an opening in a building and the rear of a vehicle drawn up to the same
Joint d'étanchéité déformable pour la fente entre le bord d'une ouverture de bâtiment et l'arrière d'un véhicule s'y approchant

(30) Priorität: 14.12.1992 DE 4242088
(43) Veröffentlichungstag der Anmeldung: 22.06.1994
(73) Patentinhaber: ALTEN GERÄTEBAU GMBH, D-30974 Wennigsen (DE)
(72) Erfinder: Borchardt, Horst, D-30974 Wennigsen (DE)
(74) Vertreter: Depmeyer, Lothar

(56) Entgegenhaltungen:
- EP-A- 0 477 674
- CH-A- 590 395
- DE-U- 8 600 773

## Beschreibung

Die Erfindung bezieht sich auf eine elastisch verformbare Dichtung des Spaltes zwischen dem Rand einer Gebäudeöffnung und dem Heck eines an diese herangefahrenen Fahrzeuges nach dem Oberbegriff des Patentanspruchs 1. Derartige Dichtungen sind aus der Patentschrift CH-A-590395 bekannt.

Bei diesen Dichtungen muss sich die Schürze der Heckgestalt des andockenden Fahrzeuges anpassen; zudem muss die Schürze insgesamt in Richtung auf das Gebäude nachgeben können, wenn die Schürze bei einer Beaufschlagung durch das Fahrzeug in Richtung auf das Gebäude abgedrängt wird. Aus diesen Gründen sind den starren, ggfs. längenverkürzbaren Lenkern Federn zugeordnet, die ein Abdrängen der Schürze nur gegen die Wirkung der Federn zulässt.

Diese durch Lenker gehaltenen Schürzen haben aber den Nachteil, dass Schrägkräfte zur einem vorzeitigen Verschleiss der Schürze und der Lenker führen können.

Ferner ist es bei elastisch verformbaren Dichtungen des Spaltes zwischen dem Rand einer Gebäudeöffnung und dem Heck eines an diese herangefahrenen Fahrzeuges bekannt ( EP-A-0477674 ), zur Aufhängung des Querteils der Schürze der Dichtung eine Traverse zu benutzen, von der aus sich eine Dachplane nach hinten erstreckt und die durch eine am Gebäude angelenkte Strebe zusammen mit dem Querteil und der Dachplane anhebbar ist.

Der Erfindung liegt die Aufgabe zugrunde, die eingangs erwähnten Dichtungen so zu gestalten, dass sie in Richtung auf das Gebäude und schräg dazu leicht verformbar und dem gemäss gut an das Heck des Fahrzeuges anpassbar ist.

Zur Lösung dieser Aufgabe sind erfindungsgemäss die Merkmale nach dem Patentanspruch 1 vorgesehen.

Diese Lenker haben den Vorteil, dass die Lenker in Längsrichtung drucksteif, quer dazu aber leicht verformbar sind, wenn entsprechende Kräfte auf die Schürze einwirken.

Weitere Einzelheiten der Erfindung werden anhand der Zeichnung erläutert, in der ein Ausführungsbeispiel der Erfindung dargestellt ist.

Es zeigen :
- Fig. 1: die linke Hälfte einer verformbaren Dichtung des Spaltes zwischen dem Rand einer Gebäudeöffnung und dem Heck eines an diese herangefahrenen Fahrzeuges in der Ansicht,
- Fig. 2: einen Schnitt nach der Linie II - II von Fig. 1,
- Fig. 3: einen Teilschnitt nach der Linie III - III von Fig. 1 und
- Fig. 4: eine Einzelheit aus Fig. 2 bei IV.

Die Wandung 1 eines Gebäudes z.B. eines Lagerhauses hat eine Gebäudeöffnung 2, die z.B. durch ein Sektionaltor verschlossen werden kann. Um den Spalt zwischen dem Rand dieser Öffnung und dem Heck eines andockenden Fahrzeuges abzudichten, wird eine verformbare Dichtung gemäss Zeichnung vorgesehen, um eine Ladebetrieb ohne grössere Witterungsnachteile durchführen zu können.

Mit Abstand von der Wandung 1 ist eine verformbare Schürze vorgesehen, die aus einem oben gelegenen Querteil 3 und zwei zu beiden Seiten der Gebäudeöffnung 2 befindlichen, senkrecht verlaufenden Streifen 4 besteht. Das vor den Streifen 4 befindliche Querteil 3 ist gardinenartig aufgehängt und oben mit einer biegesteifen Traverse 5 verbunden, die von schräg nach oben gerichteten Streben 6 getragen ist.

An der Traverse 5 ist ein Metallprofil 7 befestigt, das der Aufhängung des Querteils 3 und einer Dachplane 8 dient, die mit ihrem hintern Ende an der Wandung 1 befestigt ist.

Die beiden im Bereich der Enden des Querteils 3 angeordneten Streben 6 sind mit der Traverse 5 starr verbunden, die Streben 6 sind jedoch am unteren Ende an einem Gleitstein 8 verschwenkbar und somit im Sinne des Pfeiles 9 bewegbar. Der Gleitstein 8 kann an senkrechten Führungen 10, die an der Wandung 1 befestigt sind, Hubbewegungen ausführen. Demgemäss kann das Querteil 3 mit der Traverse 5 und der Dachplane 8 Hubbewegungen ausführen, die z.B. bei vergleichsweise hohen Fahrzeugen oder bei Hubbewegungen von Sattelaufliegern notwendig sind.

An beiden Enden der Dachplane 8 sind Überhänge 11 als frei herabhängende Lappen vorgesehen.

Für die Beurteilung der Erfindung sind die die Dichtung seitlich aussen abschliessenden Seitenteile 12 von besonderer Bedeutung. Sie sind mit einem Rand an der Wandung 1 und mit dem anderen Rand an einem senkrechten Kantenprofil 13 befestigt, das seinerseits die senkrechten Streifen 4 trägt. Die Seitenteile 12 überbrücken also dichtungsmässig den Abstand zwischen der Wandung 1 und den seitlichen Rändern der Streifen 4. Die Teile 4, 12 sind dabei - ebenso wie die Teile 3, 8 und 11 - aus einem lappigen, folienartigen Material, das sich der Kontur eines Fahrzeuges anpassen kann,insg. aber zug- und reissfest ist. Dabei kann ein mit Gummi oder Kunststoff beschichtetes Gewebe verwendet werden.

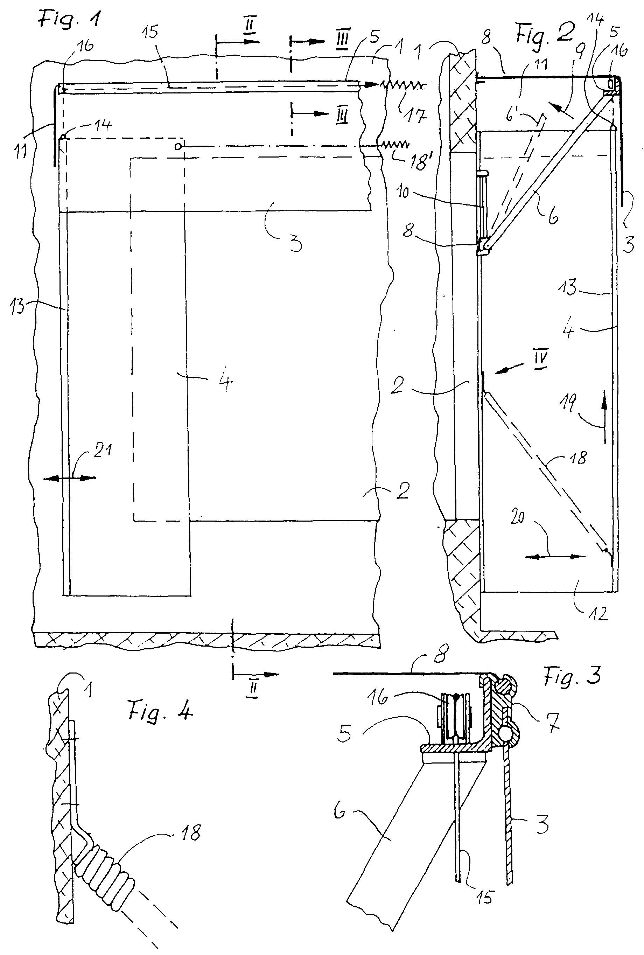

Fig. 1 und 2 lassen im übrigen erkennen, dass die beiden Streifen 4, das metallische Kantenprofil 13 und die Seitenteile 12 mit Abstand unterhalb der Dachplane 8 und der Traverse 5 enden. Der freie Raum wird jedoch nach vorne hin vom Querteil 3 und an beiden Seiten vom Überhang 11 abgedeckt und somit abgedichtet.

Die Seitenteile 12 sind nicht durch tragende, an der Wandung 1 befestigte Lenker gehalten, vielmehr sind sie nur durch etwa im Bereich der Kantenprofile 13 bei 14 angreifende Seile 15 getragen, die durch die Traverse 5 hindurchgeführt, dort mit Rollen 16 umgelenkt sind und schliesslich über eine versteckt angeordnete Zugfeder 17 in Verbindung stehen. Zusätzlich stehen die inneren Ecken der Streifen 4 über einen elastischen Zug 18' in Verbindung, wenngleich auch die Streifen 4 über nach oben gerichtete elastische Züge - an der Traverse 5 befestigt - abgefangen werden können.

Im Bereich des unteren Endes des Kantenprofils 13 ist mit diesem das untere Ende einer ganz eng gewickelten Schraubenfeder 18 fest verbunden, die unter einem Winkel von etwa 30 - 60 ° gegenüber der Senkrechten ansteigt. Sie ist zudem am oberen Ende fest mit der Wandung 1 verbunden.

Da durch die Aufhängung mit Hilfe des Seiles 15 eine Haltekraft bzw. eine Zugkraft im Sinne des Pfeiles 19, insb. in Längsrichtung des Kantenprofils 13 bedingt ist, ergibt sich eine entsprechende Krafteinwirkung auf das untere Ende der Schraubenfeder 18, während gleichzeitig in die Seitenteile 12 eine Zugspannung 20 eingeleitet wird, der jedoch das gewebeverstärkte Material für das Seitenteil 12 nicht nachgibt. Dies bedeutet, dass im Ruhezustand der Dichtung gemäss Erfindung eine gestraffte Gestalt der Seitenteile 12 gegeben ist bzw. erhalten bleibt. Die schräg anstehende,in Längsrichtung drucksteife Schraubenfeder 18 wirkt wie eine Strebe, die ein Spreizglied für die Seitenteile 12 darstellt und somit auch die Normalstellung gemäss Zeichnung sicherstellt. Die Besonderheit der genannten Schraubenfeder 18 besteht zudem darin, dass sie Lateralkräften durch elastisches Verbiegen entgegentritt. Schrägkräfte, die in aller Regel bei einer Beaufschlagung durch ein Fahrzeug entstehen, führen daher zu einer elastischen Verformung der gesamten Schürze einschl. Seitenteile 12. Verlässt das Fahrzeug die Dichtung, so kehrt die Schraubenfeder 18 in ihre gestreckte Gestalt zurück und strafft dabei die Seitenteile 12.

Darüber hinaus können durch Biegeverformung der Schraubenfeder 18 Seitenbewegungen des Kantenprofils 13 im Sinne des Doppelpfeiles 21 eintreten, und zwar im unteren, aber auch im oberen Bereich der Streifen 4, da es ja auch im oberen Bereich durch die Nachgiebigkeit der Feder 17 eine entsprechende Auslenkung erfahren kann. Durch eine vergleichsweise grosse Verformung der Streifen bzw. eine entsprechend grosse Beaufschlagung der Dichtung kann die Schraubenfeder 18 mit Zugfedereigenschaften sogar einknicken. Mit dem Nachlassen der Beaufschlagung nimmt sie dann unter Rückverformung der Dichtung insb. der Seitenteile 12 ihre gestreckte Gestalt wieder ein.

Die Spreize in Form der Schraubenfeder 18 hat somit praktisch keine tragende Funktion in bezug auf die Gewichtsbelastung durch die Streifen 4 und die Seitenteile 12; die dazu notwendigen Kräfte werden vielmehr praktisch von der Zugfeder 17 aufgenommen.

Anstelle der von der Schraubenfeder 18 gebildeten Spreize bzw. Strebe kann die Schraubenfeder 18 auch als Lenker benutzt werden, indem z.B. an dem Kantenprofil 13 zwei schräg anstehende Schraubenfedern 18 angreifen unter Bildung von Parallelogrammlenkern mit schräg nach oben gerichteten Lenkern.

Dabei ist es wiederum möglich, die Schraubenfeder 18 an ihren Enden fest mit den benachbarten Teilen, also einendig mit dem Gebäude 1 und mit dem anderen Ende mit dem Kantenprofil 13 fest zu verbinden. In diesen Fällen führen Beaufschlagungen der Schürze zu entsprechenden Verformungen der Schraubenfedern 18 durch Verbiegen und/oder seitliches Abknicken. Wie aber immer die Verformungen der Schraubenfedern 18 eintreten, sie kehren immer wieder in ihre ursprüngliche, gestreckte Gestalt zurück.

Die Erfindung ist zudem anwendbar bei solchen Schürzen, bei denen die Schürze durch einen u-förmigen Rahmen gehalten ist und die Streifen 4 an den senkrechten Schenkeln und das Querteil 3 an dem oben gelegenen Steg des Rahmens befestigt sind. Es versteht sich, dass unter diesen Bedingungen die vorderen Enden der Schraubenfedern 18 an den Schenkeln angreifen müssen, um die Halterung und Führung des u-förmigen Rahmens sicherzustellen.

Ebenso kann auch die Strebe 6 durch eine Schraubenfeder 18 ersetzt werden, wobei sich auch in diesem Falle die Verwendung eines Schwenkgelenks erübrigen kann.

## Patentansprüche

1. Elastisch verformbare Dichtung des Spaltes zwischen dem Rand einer Gebäudeöffnung und dem Heck eines an diese herangefahreneen Fahrzeuges mit einer lappigen, verformbaren Schürze zur Beaufschlagung durch das Heck des Fahrzeuges, wobei die Schürze zu beiden Seiten der Gebäudeöffnung (2) einen senkrechten Streifen (4) und ein im Bereich der oberen Streifenenden befindliches Querteil (3) aufweist, von dem aus sich eine zum Gebäude hin verlaufende Dachplane (8) erstreckt, und wobei ferner seitlich aussen an den versteiften Rändern der Streifen (4) Lenker (18) angreifen, die in Bezug auf die Senkrechte schräg verlaufen und mit ihrem hintern Ende am Gebäude (1) gelagert sind, dadurch gekennzeichnet, dass die Lenker von dicht bei dicht liegende Windungen aufweisenden Schraubenfedern (18) gebildet sind, die zur Aufnahme axialer Druckkräfte steif ausgeführt und unter der Einwirkung von Zugkräften längbar sowie bei Lateralkräften knick- und verbiegbar sind.

2. Dichtung nach Anspruch 1, dadurch gekennzeichnet, dass die beiden Enden der Schraubenfedern (18) fest mit den angrenzenden Teilen (1,13) verbunden sind.

3. Dichtung nach Anspruch 1, dadurch gekennzeichnet, dass eine zur Aufhängung des Querteils (3) dienende Traverse (5) mit der Dachplane (8) zum Anheben dieser Teile mit dem einen Ende einer schwenkbaren Strebe (6) verbunden sind, die als eine dicht bei dicht liegende Windungen aufweisende Schraubenfeder (18) ausgebildet ist, die zur Aufnahme axialer Druckkräfte steif ausgeführt und unter der Einwirkung von Zugkräften längbar sowie bei Lateralkräften knick- und verbiegbar ist.

4. Dichtung nach Anspruch 1, dadurch gekennzeichnet, dass die Streifen (4) im Bereich ihres äusseren Randes und unteren Endes mit einer Schraubenfeder (18) verbunden sind, die vom Gebäude (1) aus schräg nach unten verläuft, wobei der äussere Rand der Streifen (4) mit einem lappigen, biegsamen Seitenteil (12) für die Dichtung verbunden ist, das durch die Schraubenfeder (18) straffbar ist.

5. Dichtung nach Anspruch 1, dadurch gekennzeichnet, dass zwei übereinander angeordnete Schraubenfedern (18) Parallelogrammlenker für die seitlich aussen gelegenen versteiften Ränder der Streifen (4) bilden.

## Claims

1. Elastically deformable seal for sealing the gap between the edge of a building opening and the rear of a vehicle being positioned thereat, having a soft, deformable apron for impingement by the rear of the vehicle, wherein the apron has on both sides of the building opening (2) a vertical strip (4) and a transverse member (3), which is situated in the region of the upper strip ends, and from which a top cover (8) extends towards the building, and wherein also guide means (18) co-operate laterally externally with the reinforced edges of the strips (4), said guide means extending inclinedly relative to the vertical and being mounted with their rear end on the building (1), characterised in that the guide means are formed by spiral springs (18), which have coils situated close up to one another, said springs having a rigid configuration in order to absorb axial compressive forces and being lengthenable by the action of tensile forces as well as being yieldable and bendable in the event of lateral forces.

2. Seal according to claim 1, characterised in that the two ends of the spiral springs (18) are fixedly connected to the adjacent component parts (1, 13).

3. Seal according to claim 1, characterised in that a cross-piece member (5), which serves to suspend the transverse member (3), together with the top cover (8), are connected to one end of a pivotable strut (6) in order to raise these component parts, said strut being configured as a spiral spring (18), which has coils situated close up to one another, said spring having a rigid configuration in order to absorb axial compressive forces and being lengthenable by the action of tensile forces as well as being yieldable and bendable in the event of lateral forces.

4. Seal according to claim 1, characterised in that the strips (4) are connected to a spiral spring (18) in the region of their outer edge and lower end, which spring extends inclinedly downwardly from the building (1), the outer edge of the strips (4) being connected to a soft, flexible lateral member (12) for the seal, which lateral member is tightenable by the spiral spring (18).

5. Seal according to claim 1, characterised in that two spiral springs (18), which are disposed one above the other, form parallelogram-type guide means for the laterally externally situated, reinforced edges of the strips (4).

## Revendications

1. Dispositif d'étanchéité élastiquement déformable de la fente comprise entre le bord d'une baie de bâtiment et l'arrière d'un véhicule automobile qui s'en approche, comportant une jupe flasque, déformable en vue de la charge exercée par l'arrière du véhicule automobile, la jupe comportant de part et d'autre de la baie (2) de bâtiment une bande (4) verticale et une partie (3) transversale qui se trouve dans la zone des extrémités supérieures de bande et dont part une bâche (8) s'étendant en direction du bâtiment, et, de plus, des bras (18), qui s'étendent en biais par rapport à la verticale et qui sont montés sur le bâtiment (1) par leur extrémité arrière, attaquant latéralement à l'extérieur les bras rigidifiés des bandes (4), caractérisé en ce que les bras sont formés par des ressorts (18) hélicoïdaux, qui comportent des spires placées tout près les unes des autres, qui sont réalisés de manière à être rigides en vue d'absorber des forces de pression axiales et qui peuvent s'allonger sous l'influence de forces de traction ainsi que s'infléchir et se déformer en cas de forces latérales.

2. Dispositif d'étanchéité suivant la revendication 1, caractérisé en ce que les deux extrémités des ressorts (18) hélicoïdaux sont reliées de manière fixe aux pièces (1, 13) adjacentes.

3. Dispositif d'étanchéité suivant la revendication 1, caractérisé en ce qu'une traverse (5) servant à la suspension de la partie (3) transversale, comportant la bâche (8), est, pour soulever ces pièces, reliée à l'une des extrémités d'un montant (6) basculant réalisé en ressort (18) hélicoïdal qui comporte des spires placées tout près les unes des autres, qui est réalisé de manière rigide en vue d'absorber des forces de pression axiales et qui peut s'allonger sous l'influence de forces de traction, ainsi que s'infléchir et se déformer en cas de forces latérales.

4. Dispositif d'étanchéité suivant la revendication 1, caractérisé en ce que les bandes (4) sont reliées, dans la zone (2) de leur bord extérieur et de leur extrémité inférieure, à un ressort (18) hélicoïdal, qui s'étend en biais vers le bas à partir du bâtiment (1), le bord extérieur des bandes (4) étant relié à une pièce (12) latérale flasque, flexible, qui est destinée au dispositif d'étanchéité et qui peut être tendue par le ressort (18) hélicoïdal.

5. Dispositif d'étanchéité suivant la revendication 1, caractérisé en ce que deux ressorts (18) hélicoïdaux superposés forment des bras de parallélogramme pour les bords rigidifiés, placés latéralement à l'extérieur, des bandes (4).
